Europäisches Patentamt

(19) European Patent Office

Office européen des brevets

(11) Publication number: **0 177 451**
**B1**

# EUROPEAN PATENT SPECIFICATION

(45) Date of publication of the patent specification:
**19.04.89**

(51) Int. Cl.⁴: **B 01 D 33/10**

(21) Application number: **85810443.3**

(22) Date of filling: **26.09.85**

(54) An apparatus for separation and transportation of solid from liquid.

(30) Priority: **29.09.84 JP 146615/84 U**

(43) Date of publication of application:
**09.04.86 Bulletin 86/15**

(45) Publication of the grant of the patent:
**19.04.89 Bulletin 89/16**

(84) Designated Contracting States:
**BE CH DE FR GB IT LI**

(56) References cited:
**CH-B-428 594**
**DE-B-1 177 573**
**GB-A-1 093 948**
**US-A-3 585 924**
**US-A-4 384 955**

(73) Proprietor: **INABAC CORPORATION, 11- 9, Shiba Daimon 1-chome, Minato- ku Tokyo (JP)**

(72) Inventor: **Inaba, Mitsuru, No. 628, Jomyoji Kamakura- shi, Kanagawa- ken (JP)**

(74) Representative: **White, William, Isler AG Patentanwalts- Bureau Walchestrasse 23, CH- 8006 Zürich (CH)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convension).

## Description

This invention relates to an apparatus for filtering solid from solid-containing liquid through a screen and transporting the separated solid.

Heretofore, various apparatus for removing relatively large machined chips have been proposed and utilized for treating these chips as produced by machine tools. However, these apparatus cannot remove fine chips, which in turn are collected together with a machining fluid in a coolant tank and precipitated therein. Thus, if a largeamount of the fine chips precipitates in the coolant tank, the capacity of the tank is insufficient for coolant, which overflows from the tank. As a result, a fire accident may occur due to oil property of the coolant. Further, circulation of the unremoved chips together with the chips may block an ejecting nozzle for the coolant thereby to cause damage of the tools and worse quality of machined works. Furthermore, a setting disorder may arise in a machining center upon replacement of automatic tools, thereby to adversely affect a machining accuracy.

In veiw of the foregoing, an apparatus of such a type has been proposed that a conventional coolant tank is provided at its inner bottom with a screw conveyor for removing the precipitated chips therefrom. In such type of apparatus, however, the conveyor was generally arranged horizontally in consideration of its conveying capacity and was impossible to be arranged obliquely for the purpose of reducing a setting area.

Since most of the machined chips are generally magnetic in nature, an apparatus provided at its bottom with a magnetic plate has also been proposed to aggregate the magnetic chips at the bottom within the tank, from which they are scraped and removed by a scraper. Such apparatus, however, necessitates also enlargement of a setting area for the magnetic plate in order to increase the aggregation, thereby to require a large size of the scraper. Thus, the apparatus becomes necessarily large, thereby to raise an equipment cost. Such apparatus has a further disadvantage in that only very limited amount of non-magnetic chips can be removed.

For solving the foregoing problems, there has been proposed an apparatus for filtering the chips from chip-containing liquid, such as an coolant, by use a non rotatable filtering means, and transporting the chips on a screw conveyor, as disclosed in U.S. Patent 3 585 924 or U.S. Patent 4 384 955. However, the apparatus of such type often becomes impossible to filter the chips due to adhesion and clogging of the chips to the filtering means, and thus requires periodical stoppage of the screw conveyor for cleaning the filtering means, resulting in a time-consuming, trouble-some and inefficient operation.

Accordingly, it has long been needed to provide an apparatus for treating chips, which is compact and achieve efficient recovery and removal of the chips, as well as reduction of th.e equipment cost.

Accordingly, an object of the inventionis to provide an apparatus for separation and transportation of solid from liguid, which has been several advantages of compactness, efficient filtration, convenient maintenance, small space for placement, and reduced cost for equipment.

In view of the foregoing, this invention provides ań apparatus for separation and transportation of solid from liquid, which comprises a screw conveyor; a transporting tube containing said scerw conveyor; a filtering screen of a hollow drum or disc form adjacent to one end of said transporting tube and rotatable integrally with the screw conveyor, said screw conveyor extending on the inside of the whole length of said hollow drum or being adjacent to said disc; a receiving chamber for solid-containing liquid arranged at one end of said screen; at least one injection nozzle for a back-washing fluid arranged above an upper side of said screen; and a rotational driving means connected to one end of said screw conveyor.

Due to its ability of effective and continuous filteration of the solids through the screen, the apparatus may be compact in construction. Further, due to rising arrangement and short length of the screw conveyor, the apparatus requires less volume and thus less space for its placement.

The invention will be described hereinbelow in more detail for better understanding with reference to preferred embodiments of the accompanying drawings.

Figure 1 is a schematic sectional side view of a typical embodiment of the apparatus according to the invention;

Figure 2 is an enlarged sectional view of the apparatus taken along the line II - II in Fig. 1, showing its working state;

Figure 3 is a sectional side view of main portions of the apparatus in Fig. 1, showing detailed construction of the drum screen;

Figure 4 is a schematic sectional side view of another embodiment of the apparatus according to the invention.

Figure 5 is a schematic sectional view of main portions of another embodiment according to the invention; and

Figure 6 is an enlarged sectional view of main portions taken along the line VI - VI in Fig. 5.

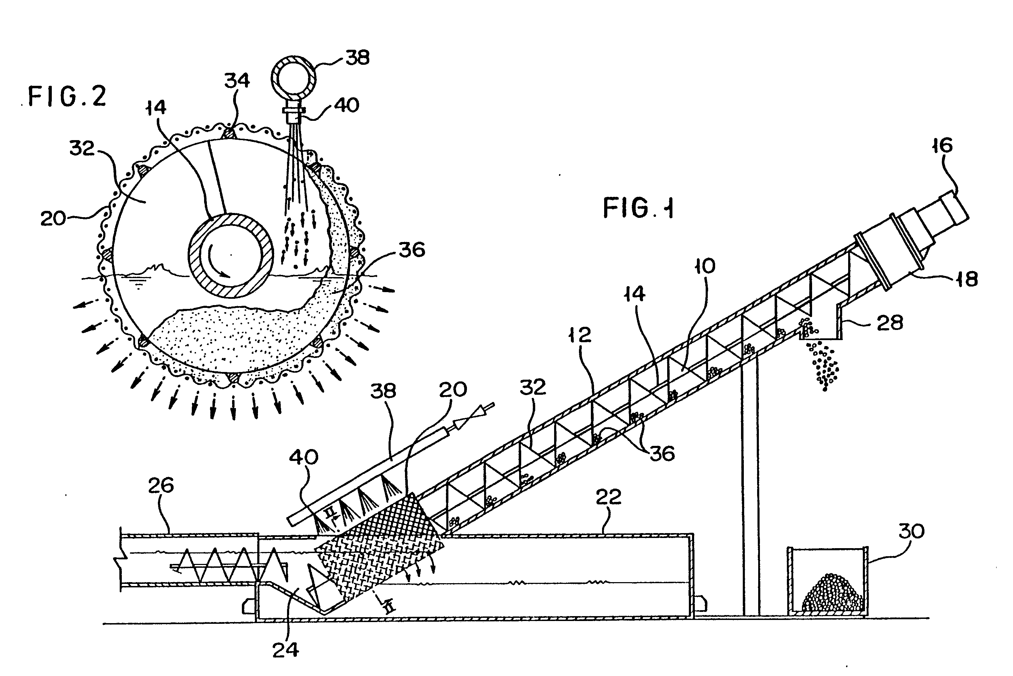

Figures 1 and 2 illustrate one embodiment of the apparatus for solid/liquid separation according to the invention. Referring to Fig. 1, there are shown a screw conveyor 10, a transporting tube 12 containing the screw conveyor, a shaft 14 of the screw conveyor, an electric motor 16 for driving the screw conveyor, and a reduction mechanism 18 connected to an output shaft of the electric motor. Contiguous to a lower end of the transporting tube 12 is arranged a hollow drum screen 20, into which is inserted a lower end of the conveyor 10. The drum screen 20 and the screw conveyor 10 are fixed to each other by means of, for example, a peripheral edge of screw vane for their integral rotation. The drum screen 20 is partially immersed in a coolant tank 22 which has a partially defined chamber 24 for an untreated coolant on the immersed side of the drum screen 20. To the chamber 24 is connected a coolant supplying pipe 26. On the other hand, the transporting tube 12 at its upper end is provided with an outlet 28 for the separated solid, under which is arranged a collecting vessel 30 therefor.

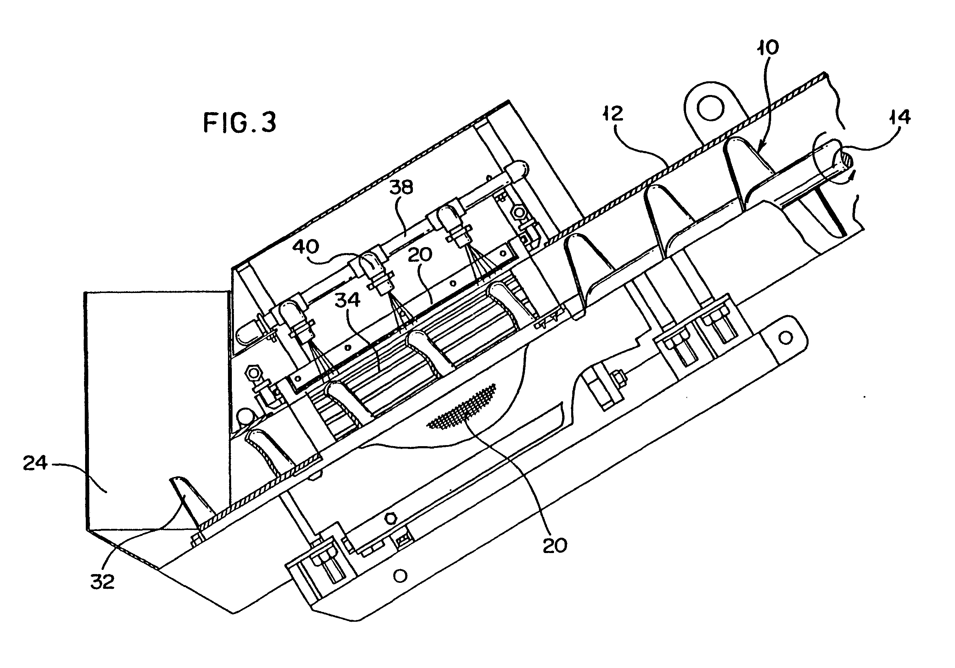

In accordance with the invention, the drum screen 20 may be formed of a wedge wire or mesh screen of about 100 - 200 mesh size, a punched plate having attached a nylon or tetron net, or any other drum structures of permitting passage of the liquid but not the solid. In order to allow the drum screen 20 to rotate integrally with the screw conveyor 10, the screw vane 32 at its peripheral edge is provided securely with a plurality of rods 34 as connecting means, which are circumferentially spaced apart from each other and extend in parallel to an axis of the screw conveyor 10, as shown in Figs. 2 and 3. These rods 34 are circumferentially covered with the drum screen 20 and fixed thereto at their contacted portions, thereby to achieve not only fixation but also reinforcement of the drum screen 20. In the drum screen 20 thus constructed, as shown in Fig. 2, the solid 36 (such as machined chips) deposited on the screw conveyor 10 tends to adhere to an inner wall of the drum screen 20 and to move upwardly with rotation of the screw conveyor 10. Taking this trend into consideration, a washing fluid supplying pipe 38 is extended along and above the drum screen 20 in the 1/4 rotational range of the screw conveyor 10 above a coolant level, and is provided with at least one injecting nozzle 40 which injects a washing fluid having a pressure of about 1 - 3 Kg/cm$^2$ against the drum screen 20 for back-washing.

As shown in Fig. 1, the transporting tube 12 is inclined at an angle of about 30 degrees or at any suitable inclination for facilitating gravitational dehydration of the moving solid 36 and ensuring enough height of the outlet 28 for collecting the solid 36 into the vessel 30. However, too high inclination adversely affects transportation of the solid 36, and thus the inclination is preferably at not more than 45, most preferably in the range of 25 to 35.

In the apparatus of this embodiment, the electric motor 16 is driven for rotating the screw conveyor 10 together with the drum screen 20 through the reduction mechanism 18, while the coolant containing the solid (such as the machined chips) is introduced into the drum screen 20 through the receiving chamber 24 from the supplying pipe 26. Then, the drum screen 20 filters the solid-containing coolant, and only the coolant passes through the drum screen 20 to be stored in the coolant tank 22. The separated solid 36 adheres to the inner wall of the drum screen 20 and is subjected to the back-washing action of the fluid from the injection nozzle 40. Then, the washed solid falls onto the screw-conveyor 10 and is transported upward through the transporting tube 12. On the way through the transporting tube 12, the solid 36 is sufficiently dehydrated to be collected from the outlet 28 into the collecting vessel 30.

If the rotation rate of the drum screen 20 is too high, the solid 36 remains adhered to the inner wall of the drum screen 20 by a centrifugal force and becomes impossible to fall down by its own weight and difficult to be transported by the screw conveyor 10. For this reason, the rotation rate of the drum screen 20 is set in the range of 1 to 50 r.p.m., preferably 5 to 20 r.p.m. The washing fluid for back-washing the drum screen 20 may be chosen depending on properties, such as viscosity, of the separated liquid and may be air or coolant free of the solid. The back-washing may be continuous, or intermittent if desired.

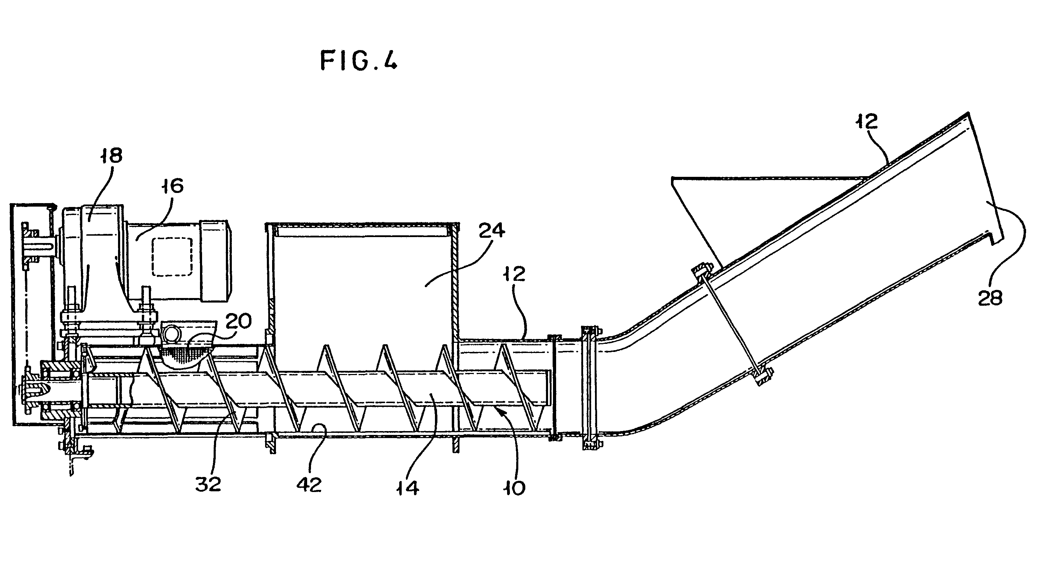

Figure 4 illustrates another embodiment of the apparatus according to the invention. For convenience of the illustration, components identical to those in the previous embodiment are shown with the same references and omitted for their description. In this embodiment, the drum screen 20 and the screw conveyor 10 are placed horizontally. For this purpose, the screw conveyor 10 is constructed in a relatively short length, the front end of which is connected to the inclined transporting tube 12. In this case, the receiving chamber 24 for the untreated coolant is arranged at one end of the screen 20 on the upstream side of the screw conveyor 10, while the drum screen 20 at its other end is provided in fluid tight relation with a driving means including the electric motor 16 and the reduction mechanism 18 for rotating the shaft 14 of the screw conveyor 10. According to the apparatus thus constructed, the coolant is supplied to the receiving chamber 24 for transporting the relatively coarse solid contained therein toward the outlet 28 on the screw conveyor 10, while the finer solid flows into the drum screen 20 for filtration to be deposited thereon and is transported successively on the screw conveyor 10 toward to the outlet 28. In this embodiment, the transporting tube 12 at its inner bottom wall surrounding the screw conveyor 10 contiguous to the drum screen 20 is provided with at least one rail 42 contacted withthe screw vane 32 in parallel to the shaft 14 of the screw conveyor 10 for preventing accompanied rotation of the solid on the rotating screw conveyor 10, thereby to ensure better transportation. Further, the solid 36 in the inclined transporting tube 12 is urged upward successively in its deposited state by a pushing force applied on the solid 36 by the screw conveyor 10.

According to the embodiment as shown in Fig. 4, the driving means for the screw conveyor 10 is arranged at one end of the drum screen 20 or at the downstream end of the screw conveyor 10 but, if desired, may be arranged at the upstream end of the screw conveyor 10 depending on the design of the apparatus. In the latter case, the rotating shaft to be rotated by the driving means may be inserted through the inclined transporting tube and joined by a universal joint or by fluid tight connection to the driving means outside the transporting tube 12 at the upstream end of the screw conveyor 10.

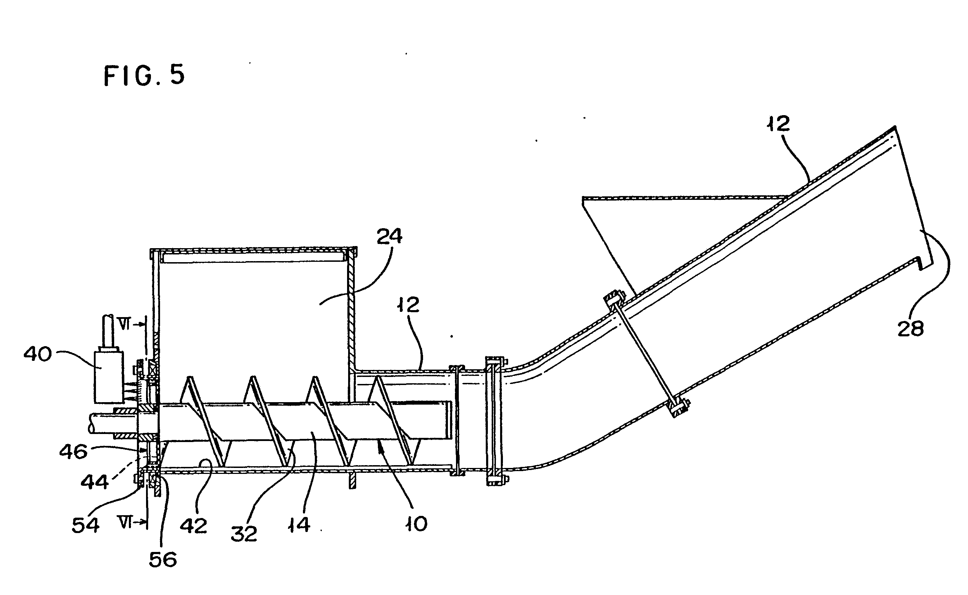

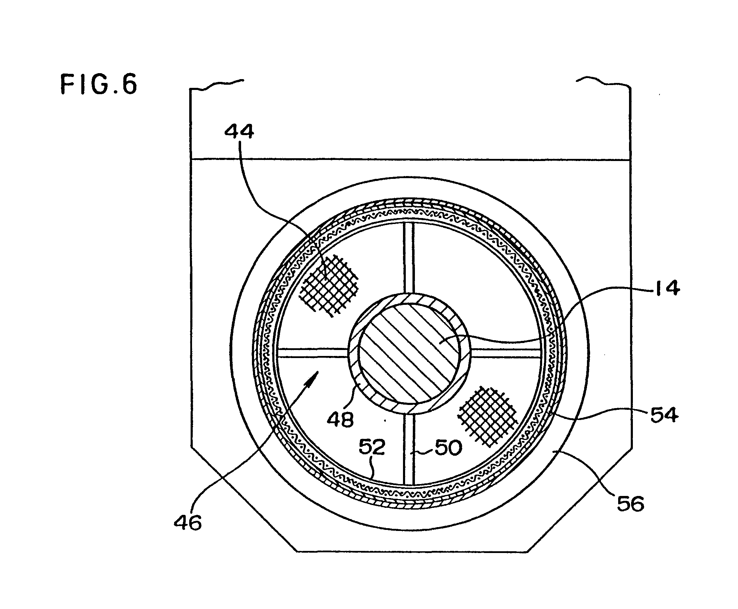

Figures 5 and 6 illustrate another embodiment of the apparatus according to the invention, in which a disc screen 44 is used in place of the drum screen of the previous embodiment. The disc screen 44 is arranged at one end side of the horizontal screw conveyor 10, as in Fig. 4, but normally to the shaft 14 for rotation integrally therewith. Other components, namely the transporting tube 12, the receiving chamber 24 for the untreated coolant and the driving means for the screw conveyor 10 are substantially identical to those of the embodiment in Fig. 4, and are represented by the same references as in Fig. 4 and may be omitted for their description.

The disc screen 44 in this embodiment may be constructed with the same material as for the drum screen and is arranged securely at one side face of a given circular supporting element 46 which is fixed to the shaft 14 of the screw conveyor 10. The supporting element 46 is composed of a boss 48, a plurality of arms 50 and a rim 52. Then, the disc screen 44 at its center is fixed to a portion of the boss 48 while at its outer end is contacted with an outer periphery of the rim 52, which is fixed by an annular element 54. The circular supporting element 46 allows the annular element 54 thereon to contact slidably and fluid-tightly to a sealing 56 provided on an inner circumference of the transporting tube 12.

With the disc screen 44 thus constructed, the substantially same effect of filtering the solids may be achieved as in the previous embodiment. According to the embodiment using the disc screen 44, its back-washing is ensured by arranging the injection nozzle 40 above the disc screen 44 and against an outer side face of the latter.

In accordance with the invention, it will be appreciated that the solid/liquid separation may be achieved by means of the screw conveyor and the screen of the drum or disc form rotatable integrally therewith, and that the separated solid may be transported and collected efficiently by the screw conveyor. Further, the screen may be back-washed continuously or intermittently by the washing fluid, thereby to prevent clogging due to-adhesion of the solid, to maintain the effective solid/liquid separation and to enhance the treating capacity considerably.

Thus, the apparatus according to the invention may be constructed in a compact type, requires less space for placement, and is convenient in maintenance of the screen with its separating function, thereby to significantly reduce the production and maintenance cost of the apparatus.

Although the invention has been described hereinabove with the preferred embodiments, it will be appreciated that the apparatus according to the invention may be widely applied to various machine tools, such as a cutter, a grinder, a rolling mill, a scrubber, a honing machine and others, for separating inorganic suspended matter (such as iron chips) from a machining oil or an engine oil, or to solid-liquid separators for liquid containing sands or activated carbons.

## Claims

1. An apparatus for separation and transportation of solid from liquid, which comprises a screw conveyor (10); a transporting tube (12) containing said screw conveyor; a filtering screen (20, 44) of a hollow drum or disc form adjacent to one end of said transporting tube and rotatable integrally with the screw conveyor, said screw conveyor extending on the inside of the whole length of said hollow drum or being adjacent to said disc; a receiving chamber (24) for solid-containig liquid arranged at one end of said filtering screen; at least one injection nozzle (40) for a back-washing fluid arranged above an upper side of said filtering screen; and a rotational driving means (16, 18) connected to one end of said screw conveyor.

2. An apparatus according to claim 1, wherein said filtering screen (20) is in the drum form (20), while its inner wall is provided witha plurality of reinforcing rods (34) parallel to the shaft (14) of said screw conveyor for securing thereto a screw vane (32) of said screw conveyor.

3. An apparatus according to claim 1, wherein said filtering screen is in the disc form (44), the center of which is connected to the shaft side of the screw conveyor while its outer end is contacted rotatably and slidably with a sealing provided on a inner circumference of the transporting tube receiving the screw conveyor.

4. An apparatus according to claim 1, wherein said filtering screen is partly immersed into a storing tank (22) of separated liquid, while said transporting tube containing the screw conveyor is inclined and is provided at its upper end with an outlet (28) for separated solid.

5. An apparatus according to claim 1, wherein said filtering screen and said screw conveyor are arranged horizontally with said receiving chamber being arranged at one end of said filtering screen on the upstream side of said screw conveyor.

6. An apparatus according to claim 1, wherein the inner wall of said transporting tube adjacent to the filtering screen is provided with at least one rail (42) parallel to the screw shaft and in contact with the screw vane for preventing rotation of the solid with the screw conveyor.

## Revendications

1. Appareil pour séparer un solide d'un liquide et le transporter, qui comprend un transporteur à vis (10); un tube de transport (12) contenant ledit transporteur à vis; un tamis filtrant (20, 44) en forme de tambour creux ou de disque adjacent à une extrémité dudit tube de transport et pouvant tourner solidairement avec le transporteur à vis, ledit transporteur à vis s'étendant à l'intérieur et sur toute la longueur dudit tambour creux ou étant adjacent audit disque; une chambre de réception (24) pour le liquide contenant le solide, prévue à une extrémité dudit tamis filtrant; au moins une buse d'injection (40) pour un fluide de rinçage, disposée au-dessus d'un côté supérieur dudit tamis filtrant; et des moyens d'entraînement en rotation (16, 18) accouplés à une extrémité dudit transporteur à vis.

2. Appareil suivant la revendication 1, dans lequel ledit tamis filtrant (20) est en forme de tambour (20), tandis que sa paroi intérieure comporte une pluralité de barres de renforcement (34) parallèles à l'arbre (14) dudit transporteur à vis pour fixation à ces barres d'une spire de vis (32) dudit transporteur à vis.

3. Appareil suivant la revendication 1, dans lequel ledit tamis filtrant est en forme de disque (44) dont le centre est relié au côté de l'arbre du transporteur à vis, tandis que son extrémité extérieure est en contact tournant et glissant avec une garniture d'étanchéité prévue sur une circonférence intérieure du tube de transport contenant le transporteur à vis.

4. Appareil suivant la revendication 1, dans lequel ledit tamis filtrant est partiellement immergé dans une cuve de stockage (22) de liquide séparé, tandis que ledit tube de transport contenant le transporteur à vis est incliné et comporte, à son extrémité supérieure, une sortie (28) pour le solide séparé.

5. Appareil suivant la revendication 1, dans lequel ledit tamis filtrant et ledit transporteur à vis sont disposés horizontalement, ladite chambre de réception étant prévue à une extrémité dudit tamis filtrant, du côté amont dudit transporteur à vis.

6. Appareil suivant la revendication 1, dans lequel la paroi intérieure dudit tube de transport adjacente au tamis filtrant comporte au moins un rail (42) parallèle à l'arbre de la vis et en contact avec la spire de vis pour empêcher la rotation du solide avec le transporteur à vis.

## Patentansprüche

1. Vorrichtung zur Separierung und zum Transport von Festkörpern aus Flüssigkeiten, mit einer Förderschnecke (10), einem Förderrohr (12), das die Förderschnecke enthält, ein Filtersieb (20, 44) in Form einer hohlen Trommel oder einer Scheibe am einen Ende des genannten Förderrohres und einstückig mit der Förderschnecke rotierbar, wobei sich die Förderschnecke über die ganze innere Länge der hohlen Trommel erstreckt oder sich nahe bei der genannten Scheibe befindet, einer Aufnahmekammer (24) für die Aufnahme der Festteile enthaltenden Flüssigkeit am einen Ende des genannten Filtersiebes, wenigstens eine Einspritzdüse (40) für Rückwaschflüssigkeit über einer oberen Seite des genannten Filtersiebes, und ein rotierendes Antriebsmittel (16, 18) am einen Ende des Schneckenförderers.

2. Vorrichtung nach Patentanspruch 1, dadurch gekennzeichnet, dass das Filtersieb (20) die Form einer Trommel (20) hat, deren innere Wand mit einer Anzahl Verstärkungsstäben (34) versehen ist, die parallel zur Welle (14) des Schraubenförderers verlaufen und zur Befestigung eines Schraubenflügels (32) des Schraubenförderers dienen.

3. Vorrichtung nach Patentanspruch 1, dadurch gekennzeichnet, dass das Filtersieb die Form einer Scheibe (44) hat, deren Zentrum mit der Welle des Schraubenförderers verbunden ist und deren Peripherie eine Dichtung innenseitig des Transportrohres für den Schraubenförderer rotierbar und daran gleitend berührt.

4. Vorrichtung nach Patentanspruch 1, dadurch gekennzeichnet, dass das Filtersieb teilweise in einem Vorratsbehälter (22) von abgetrennter Flüssigkeit eingetaucht ist, wobei das den Schraubenförderer enthaltende Transportrohr geneigt ist und an seinem oberen Ende ein Auslass (28) für separierte Festkörper hat.

5. Vorrichtung nach Patentanspruch 1, dadurch gekennzeichnet, dass das Filtersieb und der Schraubenförderer horizontal angeordnet sind und dass sich die Aufnahmekammer stromaufwärts des Schraubenförderers auf der einen Seite des Filtersiebes befindet.

6. Vorrichtung nach Patentanspruch 1, dadurch gekennzeichnet, dass die Innenwand des Transportrohres nahe beim Filtersieb mit wenigstens einer Schiene (42) parallel zur Schraubenwelle und in Berührung mit dem Schraubenflügel versehen ist, um ein Drehen der Festkörper zusammen mit dem Schraubenförderer zu verhindern.

FIG. 1

FIG. 2

FIG.3

# FIG.4

EP 0 177 451 B1

FIG. 5

FIG.6

EP 0 177 451 B1